Europäisches Patentamt

European Patent Office

Office européen des brevets

(19)

(11) Veröffentlichungsnummer: **0 222 066**
**A2**

(12) **EUROPÄISCHE PATENTANMELDUNG**

(21) Anmeldenummer: **86110350.5**

(22) Anmeldetag: **26.07.86**

(51) Int. Cl.⁴: **B 01 D 53/36**
**F 01 N 3/28**

(30) Priorität: **11.11.85 DE 3539888**

(43) Veröffentlichungstag der Anmeldung:
**20.05.87 Patentblatt 87/21**

(84) Benannte Vertragsstaaten:
**AT BE CH DE FR GB IT LI LU NL SE**

(71) Anmelder: **Didier Engineering GmbH**
**Alfredstrasse 28 Postfach 10 09 45**
**D-4300 Essen 1(DE)**

(72) Erfinder: **Flockenhaus, Claus, Prof. Dr.**
**Tersteegenweg 16**
**D-4300 Essen 1(DE)**

(72) Erfinder: **Galow, Manfred**
**Vosselerweg 2**
**D-4300 Essen 12(DE)**

(72) Erfinder: **Jansen, Johann**
**Brentanostrasse 2**
**D-4100 Duisburg 11(DE)**

(74) Vertreter: **Brückner, Raimund**
**c/o Didier-Werke AG Lessingstrasse 16-18**
**D-6200 Wiesbaden(DE)**

(54) **Halteleiste für Platten.**

(57) Mit Halteleisten sollen eine Mehrzahl von dünnwandigen, parallelstehenden Platten in einem Abstand voneinander gehalten werden, ohne daß zusätzliche Bauteile nötig sind.

In der Halteleiste 1, 1' sind Zungen 4, 5 ausgebogen. Zwischen den Zungen 4, 5 besteht ein Einschiebespalt 8 für die Platten 7.

FIG. 4

Croydon Printing Company Ltd.

DIDIER ENGINEERING GMBH
Alfredstraße 28
4300 Essen 1

Halteleiste für Platten

B e s c h r e i b u n g

Die Erfindung betrifft eine Halteleiste zum Halten einer Mehrzahl von dünnwandigen, parallelstehenden Platten, insbesondere keramischen Platten, in einem Abstand voneinander.

Bei einem Stickoxidkatalysator für Verbrennungsabgase sind in einer Katalysatorkammer zahlreiche Rahmen angeordnet, die keramische Katalysatorplatten tragen. Die Platten stehen in bestimmten Abständen voneinander. Die Befestigung der Platten in den Rahmen ist aufwendig.

Aufgabe der Erfindung ist es, eine Halteleiste vorzuschlagen, bei der sich mehrere Platten in Abständen voneinander halten lassen, ohne daß zusätzliche Bauteile nötig sind.

Erfindungsgemäß ist die genannte Aufgabe dadurch gelöst, daß die Halteleiste für jede Platte wenigstens zwei Zungen aufweist, die durch Ausstanzungen der Halteleiste gebildet sind, und daß die Zungen aus der Ebene der Halteleiste zur gleichen Seite ausgebogen sind und zwischen zwei benachbarten Zungen ein Einschiebespalt für die Platte besteht.

Zusätzliche Bauteile zur Halterung der Platten erübrigen sich, da die Zungen als Teile der Halteleiste die Platten sicher fixieren.

In Ausgestaltung der Erfindung verlaufen die Biegelinien, um die die Zungen aus der Ausstanzung gebogen sind, senkrecht zur Längsachse der Halteleiste und die Zungen sind an der Halteleiste gegenüber der Längsachse um wenigstens die Breite der Zungen versetzt. Dadurch ist erreicht, daß die Zungen relativ lang sein können, ohne daß der Abstand zwischen den Zungenpaaren und damit den Platten entsprechend groß sein muß. Die relativ große Länge der Zungen ist günstig, da dadurch der Halt der Platten verbessert wird.

In anderer Ausgestaltung der Erfindung weist die Halteleiste für jede Platte eine Ausstanzung auf, die drei Zungen bildet und so gestaltet ist, daß die Zungenwurzel der mittleren Zunge neben den Zungenspitzen der oberen und der unteren Zunge liegt und die Zungenspitze der mittleren Zunge neben den Zungenwurzeln der oberen und der unteren Zunge endet, und der Einschiebespalt besteht zwischen der mittleren ausgebogenen Zunge und der oberen und der unteren ausgebogenen Zunge. Durch die Anordnung von drei Zungen übereinander ist erreicht, daß sich in einen Einschiebespalt zwei übereinanderstehende Platten fixieren lassen.

Weitere vorteilhafte Ausgestaltungen der Erfindung ergeben sich aus den Unteransprüchen und der folgenden Beschreibung von Ausführungsbeispielen.

In der Zeichnung zeigen:

Fig. 1 eine Teilansicht einer Halteleiste mit einer an ihr fixierten Platte,

Fig. 2 eine Aufsicht längs der Linie II-II nach Fig. 1,

Fig. 3 eine Ansicht längs der Linie III-III nach Fig. 2,

Fig. 4 zwei Platten haltende Halteleisten in einer weiteren Ausführung,

Fig. 5 eine vergrößerte Teilansicht einer der Halteleisten nach Fig. 4,

Fig. 6 eine Ansicht längs der Linie VI-VI nach Fig. 5,

Fig. 7 ein weiteres Ausführungsbeispiel einer Halteleiste,

Fig. 8 eine Ansicht längs der Linie VIII-VIII nach Fig. 7, und

Fig. 9 eine Metallplatte zur Verbindung von Halteleisten zu einem Rahmen.


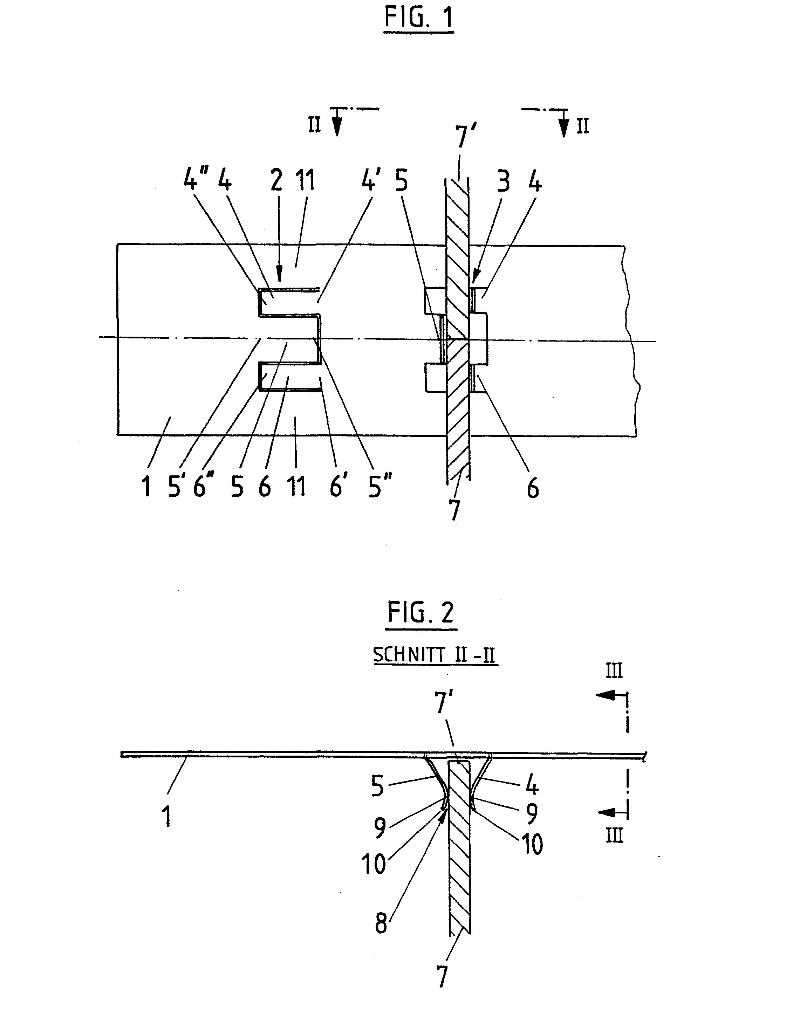

In Fig. 1 und 2 ist die Halteleiste 1 im Bereich zweier ihrer Ausstanzungen 2 und 3 dargestellt. Dabei sind bei der Ausstanzung 2 die von ihr gebildeten Zungen 4, 5 und 6 nicht aus der Ebene der Halteleiste 1 ausgebogen dargestellt. Bei der Ausstanzung 3 sind die Zungen 4, 5 und 6 aus der Ebene der Halteleiste 1 zur gleichen Seite hin ausgebogen. Zwischen sie sind übereinanderstehende keramische Platten 7 und 7' geklemmt. Die Halteleiste 1 besteht aus Stahlblech mit federelastischen Eigenschaften.

Jede Ausstanzung 2, 3 bildet die drei übereinanderliegenden Zungen 6, 5 und 4, welche gleich lang sind. Der Bereich, den die Ausstanzungen 2, 3 an der Halteleiste 1 einnehmen, ist gleich der Länge der Zungen und der Summe der Höhen der drei Zungen 4, 5 und 6. Die Ausstanzungen 2 und 3 lassen sich damit auch wesentlich näher aneinander anordnen als dies in Fig. 1 dargestellt ist.

Die Zungen 4, 5 und 6 sind über Zungenwurzeln 4', 5' bzw. 6' mit der Halteleiste 1 verbunden. Den Zungenwurzeln 4', 5' und 6' gegenüber liegen die Zungenspitzen 4'', 5'' bzw. 6''. Die Zungenwurzel 5' liegt, solange die Zungen noch nicht ausgebogen sind, zwischen den Zungenspitzen 4'', 6''. Die Zungenspitze 5'' liegt zwischen den Zungenwurzeln 4' und 6' (vgl. Fig. 1).

Die Höhe der mittleren Zunge 5 ist etwa gleich der Summe der Höhen der oberen Zunge 4 und der unteren Zunge 6. Damit ist auch die Höhe der Zungenwurzel 5' etwa ebenso groß wie die Summe der Höhen der Zungenwurzeln 4' und 6'.

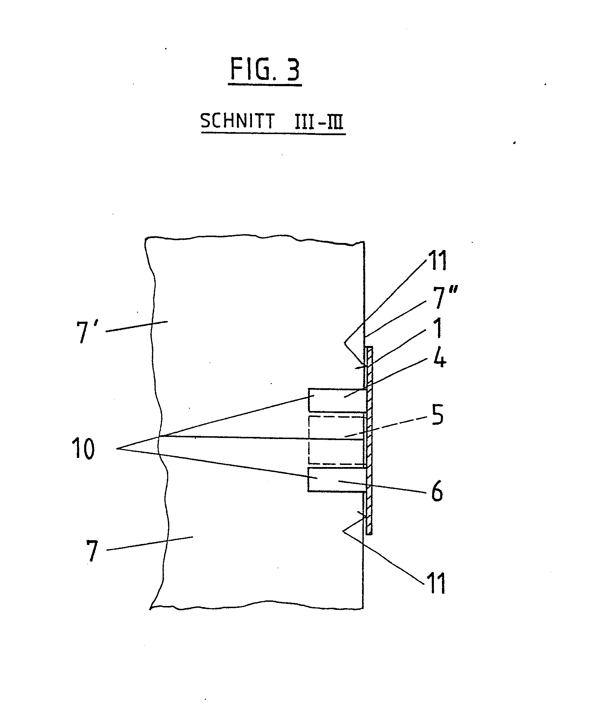

Die ausgebogenen Zungen 4, 5 und 6 bilden einen Einschiebespalt 8 für die Platte 7, 7'. Die mittlere Zunge 5 und die beiden anderen Zungen 4 und 6 laufen von den Zungenwurzeln 5', 4', 6' zum Einschiebespalt 8 hin aufeinander zu. Die Zungen 4, 5 und 6 sind länger als die Dicke der Platte 7. Dadurch ist gewährleistet, daß die Zungen 4, 5 und 6 in einem Abstand vom Rand 7'' an den Platten 7, 7' anliegen, der einen sicheren Halt der Platte 7 gewährleistet (vgl. Fig. 3).

Die Zungenspitzen 4'', 5'' und 6'' weisen Umbiegungen 9 auf, deren den Zungenwurzeln 4', 5' und 6' abgewandten Ränder 10 einen lichten Abstand haben, der größer als die Dicke der Platte 7, 7' ist. Dadurch ist das Einschieben der Platte 7, 7' zwischen die ausgebogenen Zungen 4, 5, 6 erleichtert. Die Umbiegungen 9 bilden hierbei Führungen.

Oberhalb und unterhalb der Ausstanzungen 2, 3 bildet die Halteleiste 1 einen Anschlag 11 für den Rand 7'' der Platte 7, 7'.

Bei dem Ausführungsbeispiel verlaufen die Ausstanzungen 2, 3 rechtwinklig. Bei anderen Ausgestaltungen können sie auch gerundet oder spitzwinklig verlaufen. Günstig ist, daß die Breite, die jede Ausstanzung 2, 3 an der Halteleiste 1 einnimmt, sowohl für die Länge der der einen Plattenseite zugeordneten Zungen als auch für die Länge der der anderen Plattenseite zugeordneten Zungen ausgenutzt ist.

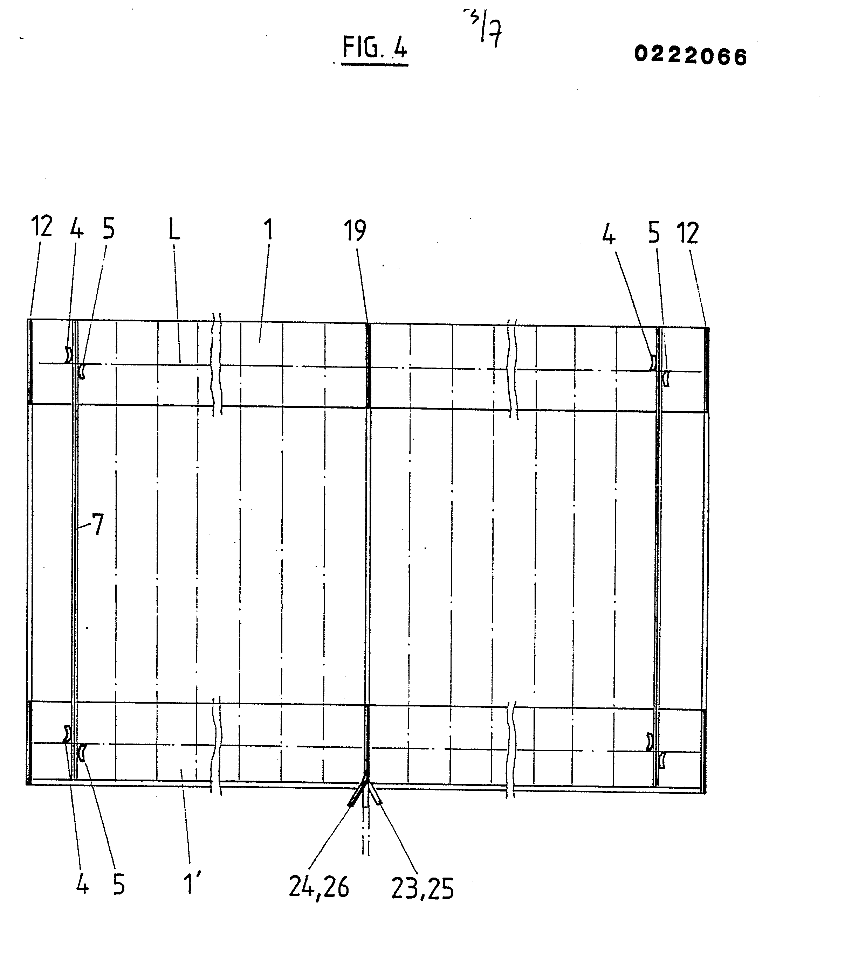

In Fig. 4 sind zwei parallele Halteleisten 1 und 1' gezeigt, die der einen Seite von Platten 7 zugeordnet sind. Der gegenüberliegenden Seite der Platten 7 sind zwei gleiche Halteleisten zugeordnet. Die Halteleisten sind durch Endplatten 12 zu einem Rahmen verbunden.

Die Halteleiste 1, 1' der Fig. 4, 5 und 6 weist zur Fixierung je einer Platte 7 zwei Zungen 4, 5 auf. Jede Zunge 4, 5 ist durch eine Ausstanzung 13, 14 gebildet, aus der die Zungen 4, 5 hochgebogen sind. Die Biegelinien liegen auch hier senkrecht zur Längsachse L der Halteleiste 1, 1'. Die

0222066

Ausstanzungen 13, 14 und damit auch die Zungen 4, 5 sind gegenüber der Längsachse L der Halteleiste 1, 1' um wenistens die Breite B der Zungen 4, 5 versetzt. Die Zungen 4, 5 stehen also übereinander. Dadurch ist auch hier erreicht, daß die Länge der Zungen 4, 5 nicht auf den halben Abstand zwischen zwei benachbarten, parallelstehenden Platten 7 begrenzt ist.

Die Zungen 4, 5 des Ausführungsbeispiels nach den Fig. 4, 5 und 6 weisen obere Schrägflächen 15 und untere Schrägflächen 16 auf. Die oberen Schrägflächen 15 erleichtern das Einschieben der Platten 7 von oben her in die Einschiebespalte 8. Sie laufen hierfür trichterförmig zu.

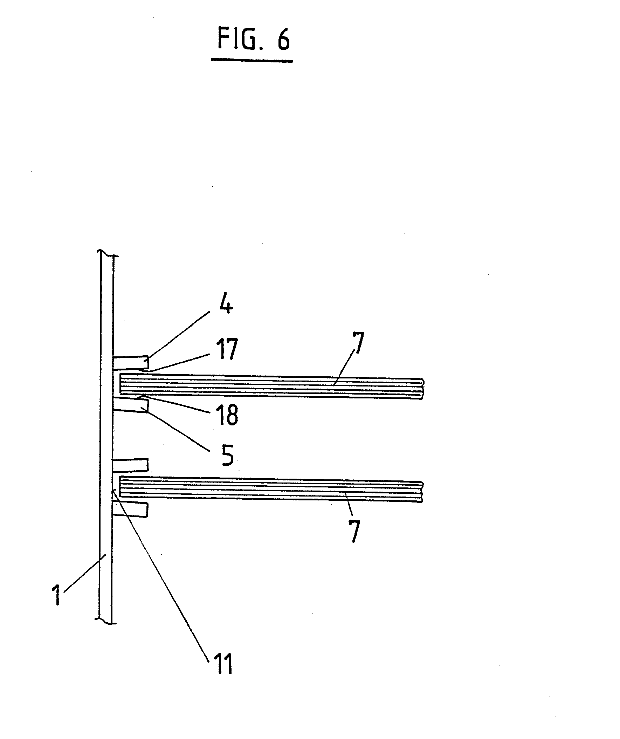

Beim Ausführungsbeispiel nach den Fig. 4, 5 und 6 sind die Zungen 4 und 5 weniger als 90°, beispielsweise 87°, aus den Ausstanzungen 13, 14 ausgebogen. Ihre Stirnseiten 17, 18 stehen also schräg zur Ebene der Platten 7 (vgl. Fig. 6), so daß der Einschiebespalt 8 zur Halteleiste 1, 1' hin sich verjüngt. Anders als beim Ausführungsbeispiel nach den Fig. 1, 2 und 3 liegen die Zungen 4, 5 hier nicht federelastisch an der Platte 7 an.

Da beim Ausführungsbeispiel nach den Fig. 4, 5 und 6 die Ausstanzungen 13 und 14 jeweils auf der den Platten 7 abgewandten Seiten der Zungen 4, 5 liegen, bildet die Halteleiste 1, 1' auch direkt vor den Zungen 4, 5 einen Anschlag 11 für die Platten 7. Demgegenüber ist beim Ausführungsbeispiel nach den Fig. 1 bis 3 der Anschlag 11 nur oberhalb und unterhalb der Zungen 4, 5, 6 gegeben.

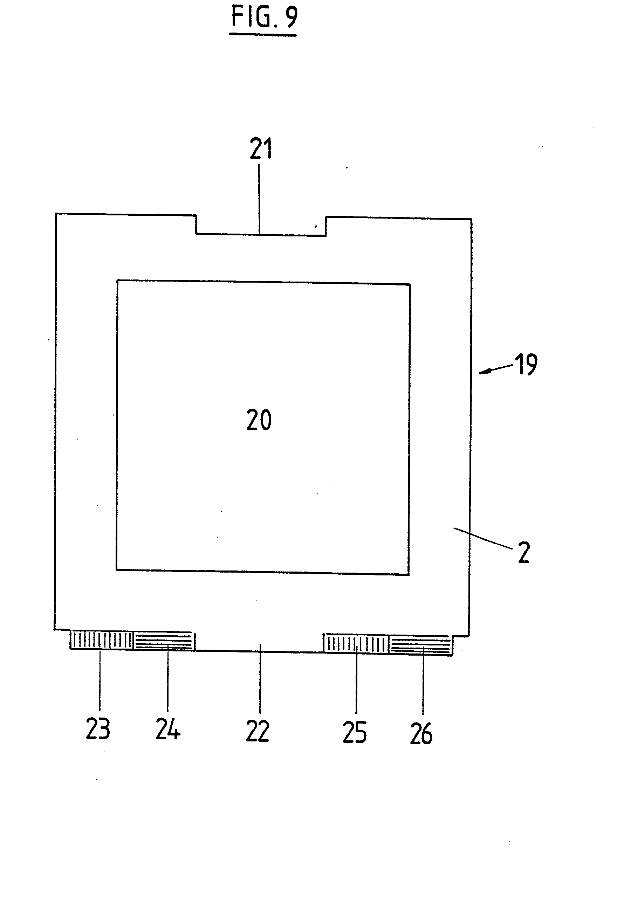

Um die genannten Halteleisten 1, 1' der einen Plattenseite und die anderen beiden Halteleisten der anderen Plattenseite gemeinsam gegeneinander zu stabilisieren, ist zwischen Zungenpaare 4, 5 im Mittelbereich der Halteleisten eine Metallrahmenplatte 19 eingesetzt und mit den Halteleisten verschweißt (vgl. Fig. 4, Fig. 9). Damit diese die Filterwirkung nicht beeinträchtigt, ist sie mit einem Ausschnitt 20 versehen. Die Metallrahmenplatte 19 ist zugleich so ausgestaltet, daß sie ein unverrückbares Stapeln zweier Rahmen aufeinander ermöglicht. Die Rahmenplatte 19 weist hierfür an ihrem oberen Rand eine Ausnehmung 21 auf.

Ein dieser entsprechender Vorsprung 22 ist am unteren Rand der Rahmenplatte 19 vorgesehen. An jeder Seite des Vorsprungs 22 sind je zwei Abbiegungen 23, 24 bzw. 25, 26 vorgesehen, wobei die Abbiegungen 23 und 25 in der Zeichenebene der Fig. 9 nach hinten und die Abbiegungen 24 und 26 um jeweils weniger als 90° abgebogen sind. Werden zwei Rahmen aufeinandergestellt, dann greift der Vorsprung 22 der einen Rahmenplatte in die Ausnehmung 21 der anderen Rahmenplatte und die Abbiegungen 23 bis 26 greifen über die an die Ausnehmung 21 anschließenden Randbereiche.

Ebenso ist es möglich, die Fixierung der Kästen durch die Kopfplatten vorzunehmen.

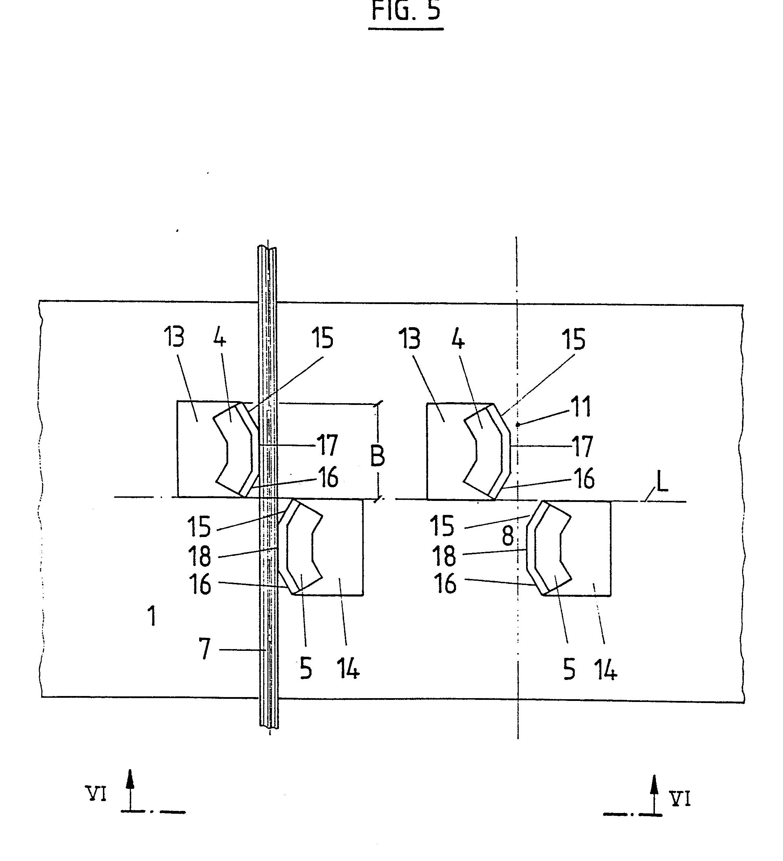

In Fig. 4 entspricht die Höhe der Platten 7 dem Abstand der Halteleisten 1, 1', so daß die Platten 7 oben von den Zungen der Halteleiste 1 und unten von den Zungen der Halteleiste 1' fixiert sind. Sollen halb so hohe Platten eingesetzt werden, dann läßt sich am Rahmen in der Mitte zwischen den Halteleisten 1 und 1' der Fig. 4 eine Halteleiste nach Fig. 1 vorsehen. Diese hält dann zwischen ihren Zungen 6 und 5 die Platten 7 im oberen Eckbereich und zwischen ihren Zungen 5 und 4 die auf den unteren Platten 7 aufstehenden Platten 7' in ihrem unteren Eckbereich. Hierfür werden dann vorzugsweise auch die Zungen 4, 5 und 6 der Fig. 1 mit Schrägflächen 15 und 16 entsprechend Fig. 5 ausgebildet.

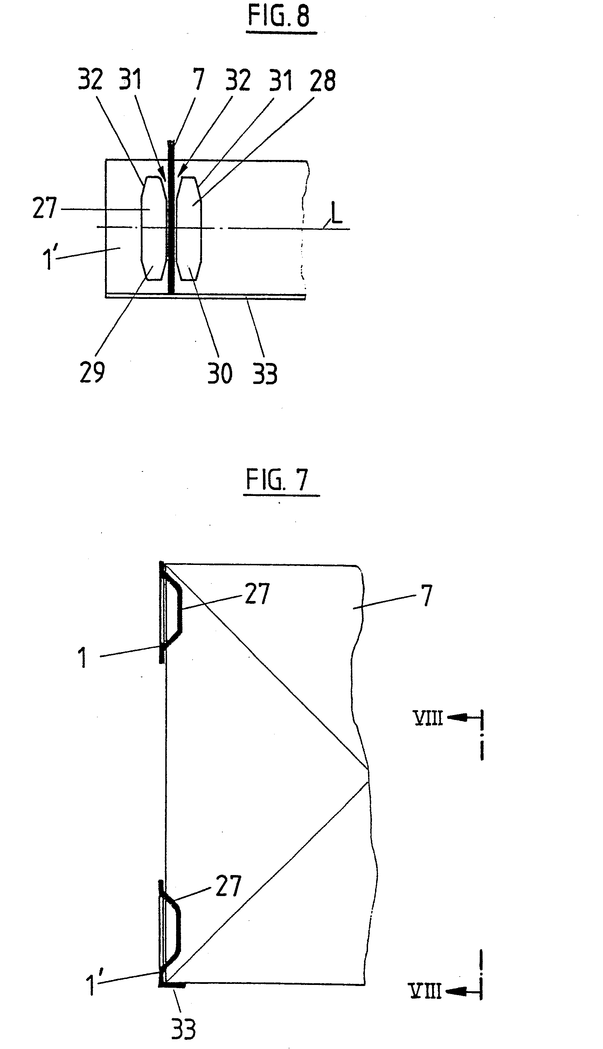

Beim Ausführungsbeispiel nach den Fig. 7 und 8 sind Zungen 27 und 28 aus Ausstanzungen 29 und 30 ausgebogen, die hier in ihrer Längserstreckung parallel zu den Plattenoberflächen verlaufen. Die Biegelinien der Zungen 27 und 28 verlaufen hier parallel zur Längsachse L der Halteleiste 1. Die Breite der Zungen 27, 28 ist gleich dem Abstand zwischen zwei Platten 7. Der Abstand der Zungen entspricht der Plattendicke (vgl. Fig. 8). Um das Einschieben der Platten 7 zu erleichtern, sind am Rand der Zungen 27, 28 Schrägen 31, 32 vorgesehen.

Um für die zwischen die Zungen eingesetzten Platten an der unteren Halteleiste ein Auflager zu bilden, ist an der unteren Halteleiste eine Abwinklung 33 vorgesehen. Diese ist in Fig. 7 gezeigt. Sie kann auch bei unteren Halteleisten der anderen Ausführungsbeispiele vorgesehen sein.

Mit den beschriebenen Halteleisten lassen sich verschiedene Rahmen für Filterplatten herstellen. Es ist auch möglich, nicht nur bei einem Rahmen unterschiedliche Halteleisten zu verwenden. Es können auch Teilmerkmale der Halteleisten ausgetauscht werden.

PH 3549

1

DIDIER ENGINEERING GMBH
Alfredstraße 28
4300 Essen 1

Halteleiste für Platten

P a t e n t a n s p r ü c h e:

1. Halteleiste zum Halten einer Mehrzahl von dünnwandigen, parallelstehenden Platten, insbesondere keramischen Platten, in einem Abstand voneinander, dadurch gekennzeichnet, daß die Halteleiste (1, 1') für jede Platte (7) wenigstens zwei Zungen (4, 5, 6; 27, 28) aufweist, die durch Ausstanzungen (2, 3; 13, 14; 29, 30) der Halteleiste (1, 1') gebildet sind, und daß die Zungen (4, 5, 6; 27, 28) aus der Ebene der Halteleiste (1, 1') zur gleichen Seite ausgebogen sind und zwischen zwei benachbarten Zungen (4, 5, 6; 27, 28) ein Einschiebespalt (8) für die Platte (7) besteht.

2. Halteleiste nach Anspruch 1, dadurch gekennzeichnet, daß die Biegelinien, um die die Zungen (4, 5, 6) aus den Ausstanzungen (2, 3; 13, 14) gebogen sind, senkrecht zur Längsachse (L) der Halteleiste (1, 1') verlaufen und daß die Zungen (4, 5, 6) an der Halteleiste (1, 1') gegenüber deren Längsachse (L) um wenigstens die Breite der Zunge (4, 5, 6) versetzt sind.

3. Halteleiste nach Anspruch 1 oder 2, dadurch gekennzeichnet, daß die Halteleiste (1, 1') für jede Platte (7) eine Ausstanzung (2, 3) aufweist, die drei Zungen (4, 5, 6) bildet und so gestaltet ist, daß die Zungenwurzel (5') der mittleren Zunge (5) neben den Zungenspitzen (4'', 6'') der oberen und der unteren Zunge (4, 6) liegt und die Zungenspitze (5') der mittleren Zunge (5) neben den Zungenwurzeln (4', 6') der oberen und der unteren Zunge (4, 6) endet.

2

4. Halteleiste nach Anspruch 3, dadurch gekennzeichnet, daß die mittlere Zunge (5) wenigstens bei ihrer Zungenwurzel (5') breiter ist als die obere oder die untere Zunge (4, 6) im Bereich ihrer Zungenwurzeln (4', 6'), die beide gleich hoch sind.

5. Halteleiste nach Anspruch 4, dadurch gekennzeichnet, daß die mittlere Zunge (5) doppelt so hoch ist wie die obere oder die untere Zunge (4, 6).

6. Halteleiste nach einem der vorhergehenden Ansprüche, dadurch gekennzeichnet, daß die Zungen (4, 5, 6) von ihren Zungenwurzeln (5', 4', 6') zum Einschiebespalt (8) aufeinander zulaufen.

7. Halteleiste nach einem der vorhergehenden Ansprüche, dadurch gekennzeichnet, daß die Zungen (4, 5, 6) federelastisch an der Platte (7) anstehen.

8. Halteleiste nach einem der vorhergehenden Ansprüche, dadurch gekennzeichnet, daß die Zungen (4, 5) sich von der Zungenwurzel (4', 5') erweiternde Sitrnseiten (17, 18) aufweisen.

9. Halteleiste nach einem der vorhergehenden Ansprüche, dadurch gekennzeichnet, daß die Zungen (4, 5, 6) gleich lang sind und ihre Länge größer als die Dicke der Platte (7) und die Wandstärke der Halteleiste (1, 1') ist.

10. Halteleiste nach einem der vorhergehenden Ansprüche, dadurch gekennzeichnet, daß die Zungen (4, 5, 6) rechteckig ausgebildet sind.

11. Halteleiste nach einem der vorhergehenden Ansprüche, dadurch gekennzeichnet, daß die Zungenspitzen (4'', 5'', 6'') Umbiegungen (9) aufweisen, deren den Zungenwurzeln (4', 5', 6') abgewandten Ränder (10) einen lichten Abstand aufweisen, der größer als die Dicke der Platte (7) ist.

12. Halteleiste nach einem der vorhergehenden Ansprüche, dadurch gekennzeichnet, daß die Zungen (4, 5; 27, 28) Schrägflächen (15, 16; 31, 32) aufweisen, die sich zwischen den Zungenwurzeln und den Zungenspitzen erstrecken und zum Einschiebespalt (8) zulaufen.

13. Halteleiste nach einem der vorhergehenden Ansprüche, dadurch gekennzeichnet, daß die Halteleiste (1, 1') oberhalb und unterhalb der Ausstanzungen (2, 3) und/oder zwischen den Ausstanzungen (13, 14; 29, 30) einen Anschlag (11) für die Platte (7) bildet.

14. Halteleiste nach einem der vorhergehenden Ansprüche, dadurch gekennzeichnet, daß an der Unterkante der Halteleiste (1, 1') eine Abwinklung (33) zum Stützen der Platten (7) vorgesehen ist.

15. Halteleiste nach einem der vorhergehenden Ansprüche, dadurch gekennzeichnet, daß die Abwinklung (33) nur vorhanden ist, wo sie als Auflage für die Platten (7) benötigt wird und zwischen den Platten (7) keine Abkantung der Leiste (1') vorhanden ist und damit die Ablagerung von Staub verhindert wird.

16. Halteleiste nach einem der vorhergehenden Ansprüche 1, 9 bis 14, dadurch gekennzeichnet, daß die Biegelinie, um die die Zungen (27, 28) aus den Ausstanzungen (29, 30) gebogen sind, parallel zur Längsachse (L) der Halteleiste (1, 1') verlaufen und daß die Zungen (27, 28) ebenso breit sind wie der Abstand zweier paralleler Platten (7).

17. Halteleiste nach einem der vorhergehenden Ansprüche, dadurch gekennzeichnet, daß zwischen Zungen (4, 5) eine Metallrahmenplatte (19) eingeschoben und mit einen Rahmen bildenden Halteleisten verschweißt ist.

18. Halteleiste nach Anspruch 17, dadurch gekennzeichnet, daß die Metallplatte (19) eine Randgestaltung (21 bis 26) aufweist, durch die zwei aufeinandergestellte Rahmenplatten (19) unverrückbar aufeinanderstellbar sind.

## FIG. 1

## FIG. 2

### SCHNITT II - II

# FIG. 3

## SCHNITT III-III

FIG. 4    ᵌ/7    0222066

## FIG. 5

VI ↑    ↑ VI

## FIG. 6

FIG. 8

32  31  7  32  31  28

27

L

1'

29  30  33

FIG. 7

27  7

1

VIII

27

1'

33

VIII

## FIG.9